Europäisches Patentamt

European Patent Office

Office européen des brevets

(19)

(11) Veröffentlichungsnummer: **0 173 936**
**B1**

(12) # EUROPÄISCHE PATENTSCHRIFT

(45) Veröffentlichungstag der Patentschrift: 17.10.90

(51) Int. Cl.⁵: **B 60 P 1/38**

(21) Anmeldenummer: 85110676.5

(22) Anmeldetag: 24.08.85

(54) **Lastfahrzeug mit einer förderbandartig geführten Ladefläche.**

(30) Priorität: 06.09.84 DE 3432764

(43) Veröffentlichungstag der Anmeldung:
12.03.86 Patentblatt 86/11

(45) Bekanntmachung des Hinweises auf die
Patenterteilung:
17.10.90 Patentblatt 90/42

(84) Benannte Vertragsstaaten:
AT BE CH DE FR GB IT LI LU NL SE

(56) Entgegenhaltungen:
DE-C- 392 785
DE-C- 399 886
FR-A- 665 383
FR-A-2 044 494
US-A-4 532 973

PATENT ABSTRACT OF JAPAN, Band 7, Nr. 207
(M-242)1352r, 13. September 1983; & JP-A-58
105 837 (SOYAO URIYUU) 23-06-1983

(73) Patentinhaber: **FUDICKAR METALL GMBH**
**Leichtmetallstr. 2-14**
**D-5657 Haan 2 (DE)**

(72) Erfinder: **Spietzack, Martin**
**Scottweg 64**
**D-5600 Wuppertal 11 (DE)**

(74) Vertreter: **Ostriga, Harald, Dipl.-Ing. et al**
**Patentanwälte Dipl.-Ing. Harald Ostriga Dipl.-**
**Ing. Bernd Sonnet Stresemannstrasse 6-8**
**D-5600 Wuppertal 2 (DE)**

Courier Press, Leamington Spa, England.

**Beschreibung**

Die Erfindung betrifft ein Lastfahrzeug, wie es entsprechend dem Oberbegriff des Patentanspruchs 1 durch die FR-A-2 044 494 bekanntgeworden ist.

Bei der vorbeschriebenen bekannten Ladefläche ist eine Antriebskette über zwei Ritzel umlaufend geführt, die auf endseitigen Querträgern gelagert sind. Die Antriebskette ist an einer vorderen Bracke angeschlagen, welche zugleich mit dem aus lamellenartigen Vollprofilen zusammengesetzten in Förderrichtung hin- und herbeweglichen Förderboden bewegungsverbunden ist. Die lamellenartigen Profile sind an ihren Längsseiten formschlüssig zugfest miteinander verbunden. Mittels eines Untersetzungsgetriebes und einer Kurbel kann die Antriebskette, mithin auch der aus den lamellenartigen Einzelprofilen zusammengesetzte Förderboden, in Förderrichtung hin- und herbewegt werden.

Der bekannte Förderboden wird als relativ schwer und hinsichtlich seines Antriebs als zu aufwendig empfunden.

Verhältnismäßig leichte metallene Hohlprofile zur Bildung eines eine Metalldecke darstellenden Förderbodens sind bereits durch die DE-C-392 785 an sich bekannt, Diese vorbekannte wickelfähige Metalldecke besteht aber aus relativ dünnen Hohlprofilstäben, die keinen zu großen Wickeldurchmesser der Antriebstrommel ergeben dürfen. Die bekannten Hohlprofilstäbe können deshalb nicht selbsttragend sein. Vielmehr müssen diese von einem gesonderten Tragboden mittels einer Vielzahl von Gleitschienen unterstützt werden, damit die Last ohne schädliche Durchbiegung der Hohlprofilstäbe aufgenommen werden kann. Im Unterschied hierzu bedient sich die Erfindung kastenförmiger Hohlprofile, welche von Haus aus ein großes Biegewiderstandsmoment bei verhältnismäßig geringer Masse aufweisen.

Beim Beladen des durch die DE-C-392 785 bekannten Lastfahrzeuges muß die Metalldecke durch spezielle Rückholseile, die auf einer bauaufwendigen gesonderten Trommel aufgewickelt sind, von der Antriebstrommel abgezogen werden.

Ausgehend von dem durch die FR-A 2 044 494 vorbekannten Lastfahrzeug, liegt der Erfindung die Aufgabe zugrunde, den förderbandartig geführten Boden baulich einfacher und ohne Verminderung seiner Tragfähigkeit leichter zu gestalten.

Diese Aufgabe ist entsprechend dem Kennzeichenteil des Patentanspruchs 1 gelöst worden.

Entsprechend der Erfindung sind die Profile als kastenförmige Hohlprofile mit dem Vorteil eines geringen Eigengewichts bei relativ großer Tragfähigkeit ausgebildet. Besonders geeignet sind in diesem Zusammenhang Leichtmetall-Strangpreßprofile.

Im Unterschied zum Gegenstand der FR-A-2 044 494 sind entsprechend der Erfindung die bezüglich der Förderrichtung endseitigen Kastenprofile über mindestens ein Zugmittel zugfest miteinander verbunden. Diese Verbindung ist derart aufgebaut, daß ein aus Kastenprofilen bestehender Längenbereich und ein aus mindestens einem Zugmittel (Kette oder Seil) gebildeter Längenbereich sich insgesamt zu einer etwa förderbandähnlichen Umlaufführung ergänzen, Diese erfindungsgemäße Ausgestaltung bedeutet eine erhebliche bauliche Vereinfachung des Antriebs.

Weitere Erfindungsmerkmale ergeben sich aus zusätzlichen Unteransprüchen sowie aus den Zeichnungen im Zusammenhang mit der Zeichnungsbeschreibung.

In den Zeichnungen ist ein bevorzugtes Ausführungsbeispiel entsprechend der Erfindung näher dargestellt, es zeigen,

Fig. 1 ein Lastfahrzeug, und zwar einen Lastkraftwagen, mehr schematisch dargestellt in Seitenansicht, wobei der förderbandartig umlaufend geführte Fahrzeugboden teilweise sichtbar ist,

Fig. 2 eine Ansicht des Fahrzeugaufbaus (unter Weglassung des Kraftfahrzeugfahrgestells) entsprechend dem in Fig. 1 mit II bezeichneten Ansichtspfeil,

Fig. 3 eine Draufsicht auf die Ladefläche (unter Weglassung des Kofferaufbaus) entsprechend dem mit III bezeichneten Ansichtspfeil und

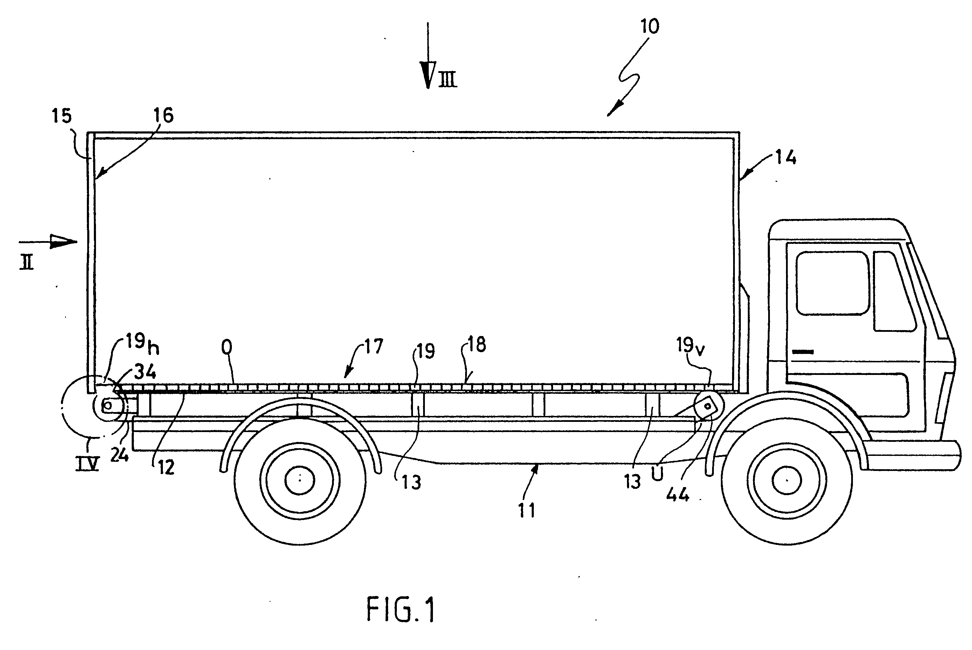

Fig, 4 eine relativ zur Darstellung in Fig, 1 vergrößerte Teilansicht entsprechend dem in Fig. 1 mit IV bezeichneten Detail.

In Fig, 1 ist ein Lastfahrzeug, und zwar ein Lastkraftwagen, insgesamt mit der Bezugsziffer 10 bezeichnet. Der Lastkraftwagen 10 weist auf seinem Fahrgestell 11 einen von Längsträgern 12 und Querträgern 13 getragenen Kofferaufbau 14 auf, dessen Heck von einer durch ein zweiflügeliges Ladetor 15 verschließbaren Ladeöffnung 16 begrenzt ist.

Der Fahrzeugboden ist insgesamt mit 17 bezeichnet und weist eine Ladefläche 18 auf.

Der Fahrzeugboden 17 ist förderbandartig umlaufend geführt und besteht in seinem Obertrum O aus selbsttragenden Leichtmetall-Strangpreßprofilen 19, $19_v$, $19_h$, die ohne weiteres eine nicht dargestellte Last tragen können. Die Strangpreßprofile 19, $19_v$, $19_h$ sind zu ihrer zugfesten Verbindung an ihren Längsseiten 20a, 20b mit formschlüssig ineinandergreifenden Gelenkkupplungsteilen 21, 22 versehen, Die im Obertrum O vorhandenen Strangpreßprofile 19, $19_v$, $19_h$ setzen also mit ihren, sich quer zur Förderrichtung (Doppelpfeil x) streifenartig dicht nebeneinander erstreckenden Deckflächen 23 die Ladefläche 18 zusammen.

Der Boden 17 des in Fig, 1 dargestellten Lastkraftwagens 10 ist bereit, Ladung (z.B. beladende Paletten od. dgl.) aufzunehmen, Im gänzlich beladenen Zustand erstrecken sich die Strangpreßprofile 19, $19_v$, $19_h$ nur über das Obertrum O hinweg. Im Untertrum U hingegen befinden sich lediglich Zugmittel, z.B. zwei Drahtseile 24, welche die beiden Außenprofile $19_v$ und $19_h$ zugfest miteinander verbinden.

Die über die Gelenkkupplungsmittel 21, 22 untereinander zugfest und darüber hinaus noch mit den umlaufend geführten Stahlseilen 24 endseitig miteinander verbundenen Strangpreßprofile 19, 19$_v$ und 19$_h$ stellen daher hinsichtlich des Kraftschlusses ein etwa förderbandartiges Gebilde dar, dessen Obertrum O allerdings selbsttragend ist.

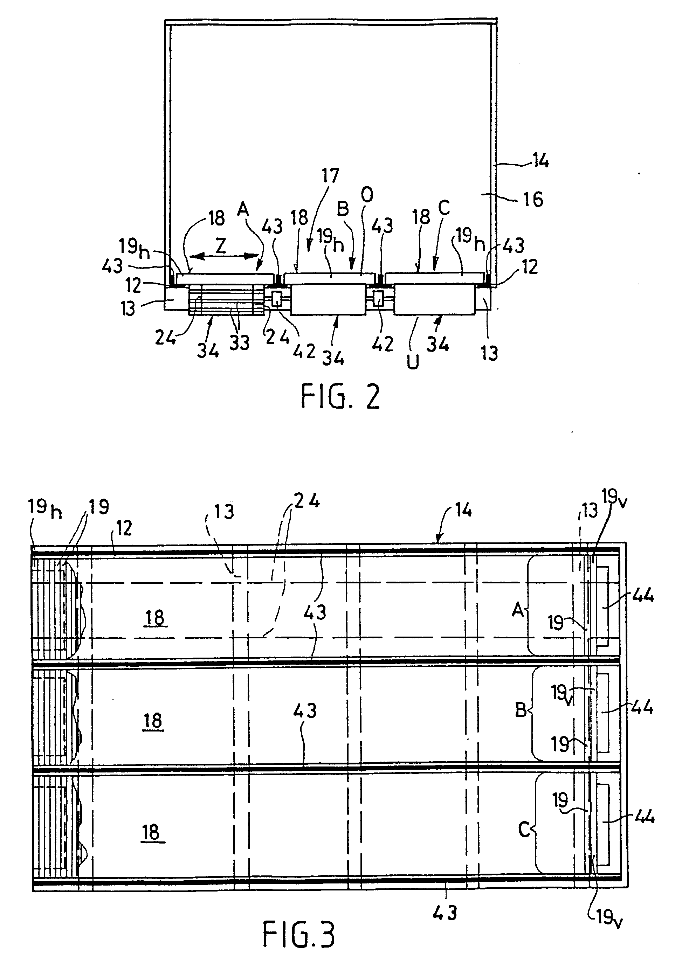

Wie aus den Fig. 2—4 im Zusammenhang ersichtlich ist, sind die Endbereiche eines jeden Strangpreßprofils 19, 19 und 19$_h$ auf den Horizontalstegen 25 der Fahrzeuglängsträger 12 geführt, im vorliegenden Falle gleitgeführt. Jedes Strangpreßprofil 19, 19$_v$ und 19$_h$ weist eine Deckenwand 26, eine Bodenwand 27 sowie Deckenwand 26 und Bodenwand 27 miteinander verbindende Stegwände 28, 29 auf. Unterhalb der Bodenwand 27 befinden sich zwei in Profillängsrichtung z, d.h. quer zur Förderrichtung x, erstreckende, etwa kufenartig profilierte Gleitrippen 30, 31.

Jeweils zwischen den beiden Gleitrippen 30, 31 ist — etwa wie bei einer Antriebskette ein Freiraum 32 für den Eingriff von Antriebsstegen 33 mindestens einer Antriebstrommel 34 vorgesehen. Die Antriebstrommel 34 ist in beiden Drehrichtungen über nicht dargestellte Mittel antreibbar.

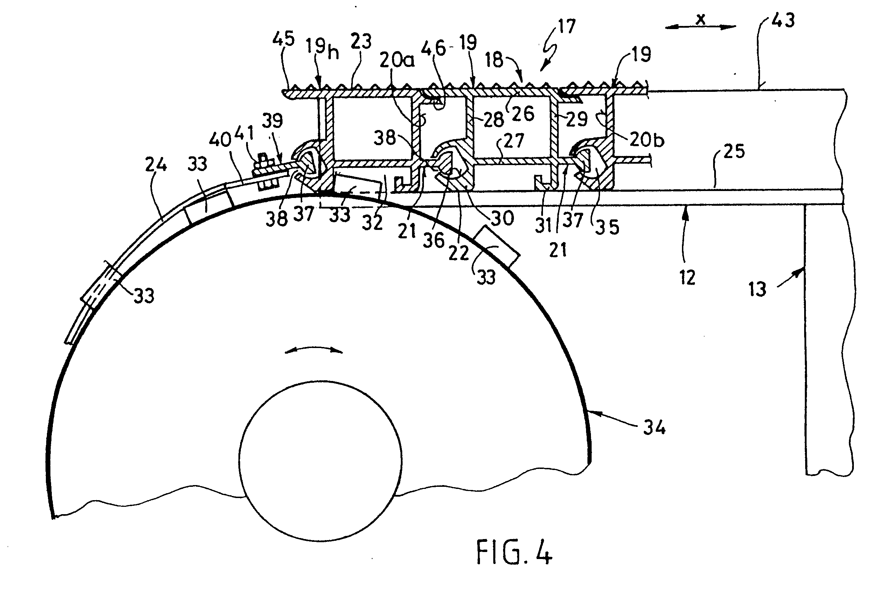

Wie aus Fig. 4 zu ersehen, sind die Gelenkkupplungsteile 21, 22 einstückig stoffschlüssig bereits während des Strangpressens der profile 19, 19$_v$ und 19$_h$ mitgebildet. Alle Strangpreßprofile 19 weisen untereinander denselben Querschnitt auf, wobei das Gelenkkupplungsteil 22 eine hinterschnittene Rinne 35 mit konkav-teilkreiszylinderförmigen Innenflächen 36 bildet. Das jeweils mit 21 zusammenwirkende Kupplungsbauteil 21 des Nachbarprofils stellt eine axial, d.h. in Profillängsrichtung z, in die Rinne 35 einschiebbare, endseitig mit einer konvex-teilkreiszylinderförmigen Verdickung 37 versehene Rippe dar. Die Rippe mit der Verdickung 37 greift durch einen Längsschlitz 38 hindurch in den einen hinterschnittenen Hohlraum bildenden Rinne 35 ein.

Ähnlich wie die Kupplungsmittel 21, 22 können auch die Anschlußmittel der Stahlseile 24 zum Anschlag an den Außenprofilen 19$_v$ und 19$_h$ sein. Aus Fig. 4 ist lediglich beispielsweise und schematisch ersichtlich, wie das Seil 24 am hinteren Strangpreßprofil 19$_h$ angeschlagen sein kann: ein etwa dem rippenförmigen Gelenkkupplungsteil 21 ähnlich gestalteter, im Querschnitt etwa klobenartiger Steg 39 ist mit einer Öse 40 des Seils 24 über Schraubverbindungsmittel 41 verbunden. Zum Anschlag des anderen Endes des Seiles 24 am vorderen Strangpreßprofil 19$_v$ können Anschlagmittel vorhanden sein, welche das rippenartige Gelenkkupplungsteil 21 des vorderen Strangpreßprofils 19$_v$ etwa wie das Gelenkkupplungsteil 22 rinnenstegartig übergreifen.

Die Funktion des Fahrzeugbodens 17 ist etwa folgende: man stelle sich vor, daß der Fahrzeugboden 17 gemäß Fig. 1 über die gesamte Ladefläche 18 hinweg mit Stückgut beladen ist. Das Stückgut soll nun entladen werden. Hierzu wird die Antriebstrommel 34 gemäß Fig 4 eingeschaltet und dreht sich entgegen dem Uhrzeigersinn, wobei die Antriebsstege 33 innerhalb des Freiraums 32 gegen die Innenflächen der Gleitrippen 30 drücken. Auf den aus den Strangprofilen 19$_h$, 19 und 19$_v$ bestehenden gesamten Fahrzeugboden 17 wird nun ein Zug ausgeübt. Es entsteht ein geschlossener Kraftfluß, der über das Strangpreßprofil 19$_v$ unter Zwischenschaltung der Stahlseile 24 auf das hintere Profil 19$_h$ zurückwirkt. Die Antriebstrommel 34 dreht sich nun so lange entgegen dem Uhrzeigersinn, bis einer der Antriebsstege 33 in den Freiraum 32 des vorderen Strangpreßprofils 19$_v$ eingreift. In dieser Entladestellung befinden sich also nahezu sämtliche Strangpreßprofile im Untertrum U.

Wenn nun der Fahrzeugboden 17 in seine in Fig. 1 dargestellte Position zurückgefahren — d.h. beladen — werden soll, wird die Antriebstrommel 34 andersherum betrieben, d.h. sie läuft im Uhrzeigersinn um und drückt mit ihren Antriebsstegen 33 gegen die Innenseiten der Gleitrippen 31. Es wird also über die jeweils links von den Antriebsstegen 33 befindlichen Strangpreßprofile 19, 19$_h$ ein Zug auf die Stahlseile 24 und schließlich auf das Profil 19$_v$ ausgeübt, so daß sich der gesamte Fahrzeugboden 17 nach rechts bewegen kann (s. Fig 4).

Es braucht nicht besonders erwähnt zu werden, daß anstelle von oder zusätzlich zu den kufenförmigen Gleitrippen 30, 31 auch auf den Stegen 25 laufende Rollen vorgesehen sein können.

Wie aus Fig. 2 im Zusammenhang mit Fig. 3 zu ersehen, ist die Ladefläche 18 in drei Förderbahnen A, B und C unterteilt. Jeder Förderbahn A, B, C sind eigene Strangpreßprofile 19$_h$, 19 und 19$_v$, eigene Stahlseile 24 und eine eigene Antriebstrommel 34 zugeordnet.

Die Antriebstrommeln 34 können zur gemeinsamen synchronen Betätigung aller Förderbahnen A, B und C auf zweckmäßige Weise miteinander verriegelt sein. Der Antrieb aller drei Förderbahnen A, B und C kann zweckmäßig derart erfolgen, daß jeder Fördertrommel 34 ein gesonderter Hydromotor zugeordnet ist. Auf diese Weise läßt sich bei sinngemäß unterteilter Ladung jede Förderbahn A, B oder C separat bedienen. Für den Fall, daß alle drei Antriebstrommeln 34 synchron betrieben werden sollen, können Schaltkupplungen 42 vorgesehen sein, die alle drei Antriebstrommeln 34 miteinander drehverbinden. Jede Trommel 34, 44 befindet sich zwischen zwei Horizontalstegen 25.

Aus den Fig. 2 und 3 ist auch zu ersehen, daß vier Längsträger 12 vorgesehen sind, von denen die äußeren Längsträger 12 ein Winkelprofil und die mittleren Längsträger 12 auf dem Kopf liegende T-Profile darstellen, dessen senkrechte Stege 43 die einzelnen in der gleichen Axialrichtung z befindlichen Strangpreßprofile 19$_h$, 19 und 19$_v$ axial voneinander distanzieren.

Die antriebslose Umkehrtrommel zur Führung der Profile 19, 19$_v$ bzw. der Seile 24 ist in Fig. 1 und 3 mit 44 bezeichnet.

Die jeweils benachbarten Längsstege 45, 46 der Profile überlappen einander auch in der nicht dargestellten Umlaufstellung auf 34, so daß rieselfähiges Gut nach Möglichkeit nicht in die Räume zwischen den Längsseiten 20a, 20b gelangen kann.

## Patentansprüche

1. Lastfahrzeug (10), insbesondere Lastkraftwagen, Lastanhänger od. dgl., mit einem zu einer Ladeöffnung (16) hin und von dieser wegbewegbaren förderbandartig geführten Boden (17) mit einer ebenen Ladefläche (18), die sich aus quer zur Förderrichtung (x) streifenartig dicht nebeneinander erstreckenden Deckflächen (23) von mindestens zugfest miteinander verbundenen Stäben (19) zusammensetzt, die als lastaufnehmende Profile ausgebildet und zu ihrer zugfesten Verbindung an ihren Längsseiten (20a, 20b) mit formschlüssig ineinandergreifenden Gelenkkupplungsteilen (21, 22) versehen sind und welche nur in einer im wesentlichen die Ladefläche (18) ergebenden Anzahl vorhanden sind, dadurch gekennzeichnet, daß die Profile als Kastenprofile, insbesondere als Leichtmetall-Strangpreßprofile (19, $19_v$, $19_h$), ausgebildet sind und daß die beiden die Ladefläche (18) in Förderrichtung (x) begrenzenden äußeren Kastenprofile ($19_v$, $19_h$) nach Art einer förderbandähnlichen Umlaufführung über mindestens ein Zugmittel (24) miteinander verbunden sind.

2. Lastfahrzeug nach Anspruch 1, dadurch gekennzeichnet, daß Gelenkkupplungsteile (21, 22) einstückig an den Kastenprofilen (19, $19_v$, $19_h$) befestigt sind.

3. Lastfahrzeug nach Anspruch 2, dadurch gekennzeichnet, daß Gelenkkupplungsteile (21, 22) einstückig-stoffschlüssig mit den Kastenprofilen (19, $19_v$, $19_h$) verbunden sind.

4. Lastfahrzeug nach Anspruch 3, dadurch gekennzeichnet, daß die Gelenkkupplungsteile (21, 22) stoffschlüssig angeformte Bestandteile der untereinander denselben Querschnitt aufweisenden Strangpreßrofile (19, $19_v$, $19_h$) darstellen, wobei ein Gelenkkupplungsteil (22) eine hinterschnittene Rinne (35) und das mit ihm zusammenwirkende Kupplungsbauteil (21) des Nachbarprofils eine axial in die Rinne (35) einschiebbare, endseitig mit einer Verdickung (37) versehene Rippe bildet.

5. Lastfahrzeug nach einem der Ansprüche 1 bis 4, dadurch gekennzeichnet, daß jedes eine Deckenwand (26), eine Bodenwand (27) sowie Decken- und Bodenwand (26, 27) miteinander verbindende Stegwände (28, 29) aufweisende Kastenprofil (19, $19_v$, $19_h$) unterhalb der Bodenwand (27) zwei sich in Profillängsrichtung (z) erstreckende, etwa kufenartig profilierte Gleitrippen (30, 31) aufweist, welche zwischen sich einen Raum (32) für den formschlüssigen Eingriff eines Antriebssteges (33) eines etwa kettensternartig ausgebildeten Antriebsrades bzw. einer Antriebstrommel (34) aufweisen.

6. Lastfahrzeug nach Anspruch 4 oder nach Anspruch 5, dadurch gekennzeichnet, daß die Gelenkkupplungsmittel (21, 22) etwa in Höhe der Bodenwand (27) am Profil (19, $19_v$, $19_h$) angeordnet sind.

7. Lastfahrzeug nach einem der vorangehenden Ansprüche, dadurch gekennzeichnet, daß die Kastenprofile (19, 19, $19_h$) beidendig bodenseitig auf Fahrzeugträgern (12) geführt sind.

8. Lastfahrzeug nach Anspruch 7, dadurch gekennzeichnet, daß die Kastenprofil-Enden auf Stegen (25) der Fahrzeugträger (12) geführt — insbesondere gleitgeführt — sind.

9. Lastfahrzeug nach einem der vorangehenden Ansprüche, dadurch gekennzeichnet, daß die Ladefläche (18) in mehrere Förderbahnen (A, B, C) mit unabhängig voneinander antreibbaren Antriebsrädern bzw. Abtriebstrommeln (34) unterteilt ist.

10. Lastfahrzeug nach Anspruch 9, dadurch gekennzeichnet, daß entsprechend der Anzahl der Förderbahnen (A, B, C) gesondert antreibbare, mittels Schaltkupplungen (42) miteinander drehverbindbare und einander koaxiale Teil-Antriebstrommeln (34) bzw. Antriebsräder oder Antriebsräderpaare vorgesehen sind.

## Revendications

1. Véhicule utilitaire (10), en particulier camion automobile, remorque de camion ou similaire, avec un plancher (17) guidé à la manière d'un tapis transporteur pouvant être déplacé vers une ouverture (16) de chargement et dans le sens opposé à cette dernière et comportant une surface plane (18) de chargement qui se compose des faces de couverture (23) s'étendant dans le sens transversal (x) au sens du transport étroitement l'une à côté de l'autre à la manière de lames et appartenant à des barreaux (19) qui, assemblés l'un à l'autre d'une manière au moins résistante à la traction, sont réalisés sous la forme de profilés qui reprennent la charge et sont munis, pour leur assemblage résistant à la traction, sur leurs côtés longs (20a, 20b), de parties (21, 22) d'accouplement articulé venant en prise l'une dans l'autre, et qui ne sont prévus qu'en un nombre aboutissant à créer pour l'essentiel le plan (18) de chargement, caractérisé par le fait que les profilés sont réalisés sous la forme de profilés en caisson, en particulier de profilés (19, $19_v$, $19_h$) venus d'extrusion en alliage léger et que les deux profilés en caisson ($19_v$, $19_h$) de rive qui délimitent le plan de chargement (18) dans le sens du transport (x), sont reliés l'un à l'autre à la manière d'un guidage en circuit fermé du genre tapis de transport par l'intermédiaire d'au moins un moyen de traction (24).

2. Véhicule utilitaire suivant la revendication 1, caractérisé par le fait que les parties (21, 22) d'accouplement articulé sont assujetties d'un seul tenant aux profilés en caisson (19, $19_v$, $19_h$).

3. Véhicule utilitaire suivant la revendication 2, caractérisé par le fait que les parties (21, 22) d'accouplement articulé sont reliées d'un même jet en cohérence continue de matière aux profilés en caisson (19, $19_v$, $19_h$).

4. Véhicule utilitaire suivant la revendication 3, caractérisé par le fait que les parties (21, 22) d'accouplement articulé sont des parties constitutives, moulées en cohérence continue de matière, des profilés d'extrusion (19, 19$_v$, 19$_h$) qui présentent les uns par rapport aux autres la même section transversale, tandis qu'une partie (22) d'accouplement articulé forme une rainure (35) en contre-dépouille et que la partie (21) d'accouplement articulé, prévue sur le profil voisin pour coopérer avec la première, forme une nervure munie à son extrémité d'un épaississement (37) pouvant être inséré dans le sens axial dans la rainure (35).

5. Véhicule utilitaire suivant l'une des revendications 1 à 4, caractérisé par le fait que chacun des profilés en caisson (19, 19$_v$, 19$_h$), qui présentent une paroi formant couverture (26), une paroi formant fond (27), ainsi que des parois de cloisonnement (28, 29) reliant l'une à l'autre la paroi formant couverture (26) et la paroi formant le fond (27), présente en contre-bas de la paroi formant le fond (27) deux nervures-glissières (30, 31) qui s'étendent dans le sens longitudinal (z) du profilé et profilées à peu près à la façon de patins, présentent entre elles un espace (32) permettant l'attaque mécanique créée par la géométrie choisie d'un taquet d'entraînement (33) d'une roue d'entraînement ou d'un tambour d'entraînement (34) configuré à peu près à la manière d'un pignon-étoile de chaîne.

6. Véhicule utilitaire suivant la revendication 1 ou la revendication 5, caractérisé par le fait que les moyens (21, 22) d'accouplement articulé sont disposés à peu près à la hauteur de la paroi formant le fond (27) sur le profil (19, 19$_v$, 19$_h$).

7. Véhicule utilitaire suivant l'une des revendications qui précèdent, caractérisé par le fait que les profilés en caisson (19, 19$_v$, 19$_h$) sont guidés côté du fond sur les deux extrémités sur des poutrelles (12) porteuses du véhicule.

8. Véhicule utilitaire suivant la revendication 7, caractérisé par le fait que les extrémités des profilés en caisson sont guidées — en particulier conduites par glissement — sur des membrures (25) des poutrelles (12) porteuses du véhicule.

9. Véhicule utilitaire suivant l'une des revendications qui précèdent, caractérisé par le fait que le plan (18) de chargement est subdivisé en plusieurs voies (A, B, C) de transport avec des roues ou des tambours d'entraînement (34) pouvant être entraînés indépendamment l'un de l'autre.

10. Véhicule utilitaire suivant la revendication 9, caractérisé par le fait que des parties ou segments de tambours d'entraînement (34) ou de roues d'entraînement ou de paires de roues d'entraînement, qui peuvent être assemblés l'un à l'autre au moyen d'accouplements (42) commandés les associant d'une manière interdisant la rotation relative entre eux et peuvent se compléter coaxialement l'un l'autre et qui peuvent être entraînés séparément l'un de l'autre, sont prévus en fonction du nombre de voies (A, B, C) de transport.

**Claims**

1. Freight vehicle (10), in particular a lorry, trailer or the like, having a floor (17), which is conveyed in the manner of a conveyor belt so as to be movable towards and away from a loading opening (16) and has a flat loading area (18) made up of top surfaces (23), which extend strip-like and closely adjacent to one another across the conveying direction (x), of bars (19) in the form of load-bearing sections which are connected to one another at least in a tension-proof manner, for which purpose they are provided at their longitudinal sides (20a, 20b) with positively interlocking flexible coupling elements (21, 22), and of which a number basically producing the loading area (18) is provided, characterised in that the sections take the form of box-type sections, in particular light metal extruded sections (19, 19$_v$, 19$_h$), and that the two outer box-type sections (19$_v$, 19$_h$) defining the loading area (18) in conveying direction (x) are connected to one another in the manner of a conveyor-belt-like continuous guideway by means of at least one traction mechanism (24).

2. Freight vehicle according to claim 1, characterised in that flexible coupling elements (21, 22) are fastened as a single piece on the box-type sections (19, 19$_v$, 19$_h$).

3. Freight vehicle according to claim 2, characterised in that flexible coupling elements (21, 22) are connected as a single piece of the same substance to the box-type sections (19, 19$_v$, 19$_h$).

4. Freight vehicle according to claim 3, characterised in that the flexible coupling elements (21, 22) are moulded-on components, in the same substance, of the extruded sections (19, 19$_v$, 19$_h$) which are identical in cross-section, with one flexible coupling element (22) forming an undercut trough (35) while the coupling component (21) of the adjacent section cooperating therewith forms a rib which can be pushed axially into the trough (35) and is provided at its end with an enlarged portion (37).

5. Freight vehicle according to one of claims 1 to 4, characterised in that each box-type section (19, 19$_v$, 19$_h$), having a top wall (26), a bottom wall (27) and web walls (28, 29) interconnecting the top and bottom walls (26, 27), has below the bottom wall (27) two sliding ribs (30, 31) profiled approximately in the manner of runners which extend in the longitudinal direction (z) of the section and have between them an area (32) into which a driving web (33) of an approximately chain-starwheel-like driving gear or a driving pulley (34) can positively engage.

6. Freight vehicle according to claim 4 or according to claim 5, characterised in that the flexible coupling means (21, 22) are disposed on the section (19, 19$_v$, 19$_h$) approximately at the level of the bottom wall (27).

7. Freight vehicle according to one of the previous claims, characterised in that the box-type sections (19, 19$_v$, 19$_h$) are conveyed at either end and at their bottom side on vehicle support members (12).

8. Freight vehicle according to claim 7 characterised in that the ends of the box-type sections are conveyed — in particular glide — on webs (25) of the vehicle support members (12).

9. Freight vehicle according to one of the previous claims, characterised in that the loading area (18) is subdivided into a plurality of conveying paths (A, B, C) having driving gears or driving pulleys (34) which can be driven independently of one another.

10. Freight vehicle according to claim 9. characterised in that according to the number of conveying paths (A, B, C), sectional driving pulleys (34) or driving gears or pairs of driving gears are provided coaxially to one another, which can be driven separately and are rotationally connectible to one another by means of shift couplings (42).

FIG.1

EP 0 173 936 B1

FIG. 2

FIG.3

FIG. 4